# EUROPÄISCHE PATENTSCHRIFT

(11) **EP 2 425 031 B1**
(45) Veröffentlichungstag und Bekanntmachung des Hinweises auf die Patenterteilung: **02.07.2014**
(21) Anmeldenummer: 10718540.7
(22) Anmeldetag: 26.04.2010
(51) Int. Cl.: C22C 21/14, C22C 21/16, F16C 33/12

(54) **GLEITLAGERELEMENT MIT BLEIFREIER ALUMINIUM-LAGERMETALLSCHICHT**
SLIDING BEARING ELEMENT COMPRISING A LEAD-FREE ALUMINUM BEARING METAL LAYER
ÉLÉMENT DE PALIER LISSE À COUCHE MÉTALLIQUE ANTIFRICTION EN ALUMINIUM EXEMPTE DE PLOMB

(30) Priorität: 28.04.2009 DE 102009002700
(43) Veröffentlichungstag der Anmeldung: 07.03.2012
(73) Patentinhaber: Federal-Mogul Wiesbaden GmbH, 65201 Wiesbaden (DE)
(72) Erfinder: GROOTEBOER, Thomas, 55270 Essenheim (DE); LINDNER, Karl-Heinz, 45481 Mülheim (DE); LEBIEN, Karl-Heinz, 65375 Oestrich-Winkel (DE)
(74) Vertreter: Mehler, Klaus
(86) Internationale Anmeldenummer: PCT/EP2010/055530
(87) Internationale Veröffentlichungsnummer: WO 2010/125026

(56) Entgegenhaltungen:
- CH-A- 340 777
- DE-A1- 10 149 675
- DE-B- 1 191 114
- FR-A- 523 853
- GB-A- 596 260
- GB-A- 708 472
- GB-A- 1 016 069
- US-A- 5 470 666

## Beschreibung

Die Erfindung betrifft ein Gleitlagerelement mit einer Stützschicht, einer vorzugsweise bleifreien Zwischenschicht auf Basis einer Aluminiumlegierung und einer vorzugsweise bleifreien Lagermetallschicht auf Basis einer Aluminiumlegierung.

Derartige Lager sind Gegenstand einer Vielzahl von Druckschriften. Beispielhaft wird auf die Offenlegungsschriften EP 0 672 840 A2, EP 1 522 750 A1 oder das US-Patent 5,470,666 verwiesen. Das Gleitlagerelement in Form einer Lagerschale weist eine Stützschale aus Stahl auf, auf die eine folienartige Lagermetallschicht oder Laufschicht durch Walzplattieren aufgetragen ist. Da die in der Regel hochzinnhaltige Lagermetallschicht auf Aluminiumbasis bekanntermaßen nicht mit ausreichender Haftung auf die Stahlstützschicht plattiert werden kann, wird die Lagermetallschicht zunächst mit einer Zwischenschicht durch Walzplattieren zu einem Folienverbund vorplattiert. Anfänglich wurde hierbei auf eine Zwischenschicht aus Rein-Aluminium zurückgegriffen, welches eine sehr gute Haftung auf der Stahlstützschicht ermöglicht. Dieser Folienverbund wird dann zusammen in mehreren Walzschritten mit oder ohne thermische Zwischenbehandlung auf die Stahlstützschicht unter Verringerung der Schichtdicken aufgebracht. Der fertige Verbundwerkstoff wird anschließend durch Stanzen oder Schneiden zu Platinen verarbeitet und in Abhängigkeit von dem fertigen Erzeugnis durch Biegen oder Roll-Umformen zu einem Radiallager verarbeitet.

Vorgenannte Druckschriften basieren auf der Erkenntnis, dass zwar die Haftung der Aluminium-basierten Lagermetallschicht auf der Stahlstützschicht verbessert werden kann, jedoch die Werkstoffeigenschaften der reinen Aluminiumzwischenschicht keine hinreichende Dauerfestigkeit des Verbundwerkstoffes im Betrieb sicherstellen. Deshalb schlägt die EP 0 672 840 A2 vor, anstelle der Rein-Aluminiumfolie eine Zwischenschicht auf Basis einer aushärtbaren Aluminiumlegierung - gegebenenfalls mit Notlaufeigenschaften - auszubilden. Die Härte der so gebildeten Zwischenschicht wird auf einen Wert von etwa 60 HV 0,5 eingestellt und ist damit höher als die Härte der Laufschicht, welche etwa 35 bis 40 HV 0,5 beträgt. Die in Richtung der Lagermetallschicht oder Laufschicht abnehmende Härte soll sich günstig auf die Dauerfestigkeit und damit auf die Belastbarkeit und die Lebensdauer des Gleitlagers auswirken.

Zu einem ähnlichen Ergebnis gelangt die US 5,470,666. Auch hier nimmt die Härte von der Gleitlagerschicht über die Zwischenschicht zur Metallstützschicht hin zu, wobei die Härte der Zwischenschicht zwischen 25 HV und 60 HV eingestellt ist. Die Dicke der Zwischenschicht beträgt 50 bis 90 % der Gesamtdicke der Lagermetallschicht und der Zwischenschicht. Die Zwischenschicht ist also wenigstens genauso dick oder wesentlich dicker als die Lagermetallschicht. Die Zwischenschicht wird aus einer Aluminiumlegierung mit in Summe 0,3 bis 5 Gew.-% an Legierungsbestandteilen gebildet, welche aus der Gruppe bestehend aus Mn, Cu, Zn, Si, Mg und Fe ausgewählt sind. Die Obergrenze der Zwischenschichthärte von 60 HV wird durch die Formanpassungsfähigkeit bestimmt, die zum Ausgleich von Kantenträgem, d.h. einer unvermeidbaren Fehlausrichtung zwischen der Welle und der Lagerachse, notwendig ist.

Die GB 2 271 779 offenbart ein Gleitlagerelement mit einer Zwischenschicht aus bis zu 1,7 Mn, bis zu 1,2 Cu, bis zu 1,8 Mg und Rest Al mit einer Härte von 35-72 Hv.

Weiter offenbart die GB 708 472 A ein Gleitlagerelement mit einer Schützschicht, einer Zwischenschicht auf Basis einer Aluminiumlegierung, bei welchem die Aluminiumlegierung der Zwischenschicht eine Zusammensetzung von 4,5 Cu, 0,6 Mn, 1,5 Mg und Rest Aluminium aufweist. Aussagen zur Härte sind hierin nicht getroffen.

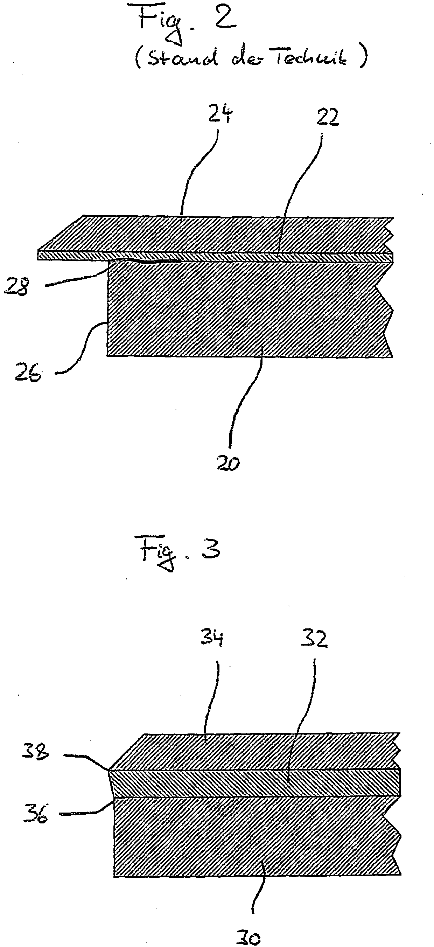

Die Erfinder haben festgestellt, dass sich bei den bekannten Lagern unter den hohen spezifischen Lasten im Betrieb ein so hoher Verformungsgrad in der Zwischenschicht einstellt, dass eine Verdrängung des Zwischenschichtmaterials in axialer Richtung erfolgt. Die Zwischenschicht quillt gewissermaßen axial aus den Stirnflächen der Gleitlagerschalen heraus. Dieses Phänomen ist in Figur 2 schematisch dargestellt. Die Gleitlagerschale gemäß dem Stand der Technik ist im Hauptbelastungsbereich (beispielsweise in der Nähe ihres Scheitelpunktes) in einem Axialschnitt ausschnittsweise dargestellt. Sie weist auf ihrer radialen Außenseite eine Stahlstützschicht 20, darauf eine aluminiumbasierte Zwischenschicht 22 und darauf eine Lagermetallschicht 24 auf. Aufgrund der insbesondere im Hauptlastbereich auftretenden hohen spezifischen Lasten beginnt die Zwischenschicht 22 in axialer Richtung (ähnlich wie beim Walzplattieren) zu fließen und wird über die axialen Stirnfläche 26 der Stahlstützschicht 20 hinaus aus dem Lager gequetscht. Mit der Zwischenschicht 22 wird teilweise auch die Lagermetallschicht 24 aus dem Lager heraus verdrängt. Das Lagermetall und die Verbindung zwischen Lagermetall- und Stützschicht bleiben dabei unbeschädigt und zeigen kein funktionales Versagen. Allerdings werden nahe der Stirnfläche 26 Risse 28 zwischen der Stahlstützschicht 20 und der Zwischenschicht 22 erkennbar. Diese erhöhen bei Fortsetzung des Betriebs in Verbindung mit dem herausgequollenen Material der Lagermetallschicht und der Zwischenschicht das Risiko einer Ablösung und damit eines Totalausfalls des Lagers.

Aufgabe der Erfindung ist es deshalb, den Verbund bestehend aus einer Lagermetallschicht und einer Zwischenschicht, jeweils auf Basis einer Aluminiumlegierung, und der Stahlstützschicht der Gestalt zu verbessern, dass eine plastische Materialverformung der vorstehend beschriebenen Art weitgehend vermieden wird.

Die Aufgabe wird erfindungsgemäß durch ein Gleitlagerelement mit dem Merkmal des Patentanspruches 1 gelöst. Das erfindungsgemäße Gleitlagerelement, welches insbesondere in Form einer Lagerschale ausgebildet ist, mit einer Stützschicht, einer Zwischenschicht auf Basis einer Aluminiumlegierung und einer Lagermetallschicht auf Basis einer Aluminiumlegierung ist dadurch gekennzeichnet, dass die Aluminiumlegierung der Zwischenschicht eine Zusammensetzung mit wenigstens den Bestandteilen 3,5 Gew.-% bis 4,5 Gew.-% Kupfer, 0,1 Gew.-% bis 1,5 Gew.-% Mangan und 0,1 Gew.-% bis 1,5 Gew.-% Magnesium aufweist, wobei die Zwischenschicht eine Mikrohärte von 70 HV 0,01 bis 110 HV 0,01 und besonders bevorzugt von 85 HV 0,01 bis 100 HV 0,01 aufweist. Optional weist die Legierung 0,1 Gew.-% bis 1,0 Gew.-% Silizium, 0,05 Gew.-% bis 1,0 Gew.-% Eisen, 0,05 Gew.-% bis 0,5 Gew.-% Chrom, 0,05 Gew.-% bis 0,5 Gew.-% Zink, Zirkonium und Titan in der Summe zwischen 0,05 Gew.-% und 0,25 Gew.-% und/oder andere Legierungsbestandteile mit nicht mehr als 0,1 Gew.-% im Einzelnen und 0,25 Gew.-% in der Summe auf.

Insbesondere aufgrund des hohen Kupferanteils lässt sich die Härte der Zwischenschicht ohne Einbußen hinsichtlich der Bindungsfestigkeit zu der vorzugsweise aus Stahl bestehenden Stützschicht einstellen. Das Einstellen geschieht während eines Walzplattiervorgangs und aufgrund geeigneter Wärmebehandlung vor und/oder zwischen und/oder nach den Walzstichen.

Bevorzugt weist die Zwischenschicht des auf Endmaß gewalzten Gleitlagerelementes eine Dicke d₂ von 30 µm bis 250 µm und in Abhängigkeit von der Wanddicke der Lagerschale von 50 µm bis 250 µm, besonders bevorzugt von 80 µm bis 175 µm und ganz besonders bevorzugt von 150 µm bis 175 µm auf.

Die Erfinder haben festgestellt, dass eine Zwischenschicht dieser Dicke und mit der vorgenannten Zusammensetzung bei vergleichsweise hoher Härte geeignet ist, um einerseits eine hinreichende plastische Nachgiebigkeit und somit eine hinreichende Formanpassungsfähigkeit zu erzielen. Andererseits kann durch eine hohe einstellbare Härte in Verbindung mit der vergleichsweise dicken Zwischenschicht sichergestellt werden, dass das Zwischenschichtmaterial trotz plastischer Verformung nur in geringem Maße aus dem Werkstoffverbund heraus gequetscht wird.

Die Härteprüfung nach Vickers erfolgt gemäß der europäischen Norm EN 6507-1 an der Zwischenschicht des fertigen (umgeformten) Gleitlagerelementes. Die Prüfspitze (der Eindringkörper) wird hierbei in Ebenenrichtung der Zwischenschicht in diese im Bereich einer präparierten Schnittkante des Gleitlagerelementes eingedrückt. Die Schnittkante wird vorzugsweise durch Schleifen vorbereitet.

Das Silizium in der Aluminiumlegierung der Zwischenschicht führt zur Festigkeitssteigerung der Al-Legierung.

Ganz besonders bevorzugt weist die Aluminiumlegierung der Zwischenschicht in Gew.-% auf: Mangan 0,4 % bis 1,0 %, Magnesium 0,4 % bis 1,0 % und Silizium 0,2 % bis 0,8 %. Alle diese Legierungselemente dienen der Festigkeits- und Härtesteigerung des Materials.

Die Lagermetallschicht des Gleitlagerelements weist bevorzugt eine Dicke d₃ von 150 µm bis 400 µm und besonders bevorzugt von 200 µm bis 400 µm auf.

Die Lagermetallschicht weist bevorzugt eine Aluminiumlegierungen mit 1,0 - 3 Gew.% Nickel, 0,5 - 2,5 Gew.% Mangan, 0,02 -1,5 Gew.% Kupfer, einem Weichphasenanteil von 5 - 20 Gew.%, den üblichen zulässigen Verunreinigungen und Rest Aluminium auf. Der Weichphasenanteil beträgt bezogen auf die gesamte Aluminiumlegierung insbesondere bevorzugt 8 - 12 Gew.-%. Beispielsweise eignet sich eine AlSn11.5Ni1.5Cu0.6Mn0.6-Legierung für die Lagermetallschicht.

Als Weichphasenanteile der Lagermetallschicht sind Zinn und/oder Wismut bevorzugt.

Die Lagermetallschicht, insbesondere in einer der vorgenannten Zusammensetzungen, ist vorzugsweise auf eine Brinellhärte von 50-70 HBW 1/5/30 und besonders bevorzugt von 50-60 HBW 1/5/30 eingestellt.

Zwischen der Zwischenschicht und der Lagermetallschicht und/oder zwischen der Zwischenschicht und der Stützschicht besteht vorzugsweise eine Walzplattierverbindung.

Weitere Aufgaben, Merkmale und Vorteile werden nachfolgend anhand eines Ausführungsbeispiels mit Hilfe der Zeichnungen näher erläutert. Es zeigen:
- Figur 1: einen perspektivischen Ausschnitt eines Ausführungsbeispiels des erfindungsgemäßen Gleitlagerelementes in Form einer Lagerschale;
- Figur 2: einen axialen Querschnitt im Scheitelbereich durch eine Lagerschale gemäß Stand der Technik nach Belastung;
- Figur 3: einen axialen Querschnitt im Scheitelbereich durch eine erfindungsgemäße Lagerschale nach Belastung;
- Figur 4: einen Verlauf des Druckprofils in Umfangsrichtung entlang einer belasteten Lagerschale beim erstmaligen Gebrauch;
- Figur 5: den Druckprofilverlauf in Umfangsrichtung entlang der Lagerschale bei derselben Belastung wie gemäß Figur 4, jedoch nach plastischer Umformung;
- Figur 6: den Druckprofilverlauf in axialer Richtung im Bereich maximaler Belastung der Lagerschale beim erstmaligen Gebrauch;
- Figur 7: der Druckprofilverlauf in axialer Richtung im Bereich maximaler Belastung der Lagerschale nach plastischer Umformung und
- Figur 8: die plastische Nachgiebigkeit eines Ausführungsbeispiels der erfindungsgemäßen Lageschale im Bereich maximaler Belastung in axialer Richtung in Abhängigkeit von dem Material bzw. der Härte sowie der Dicke der Zwischenschicht.

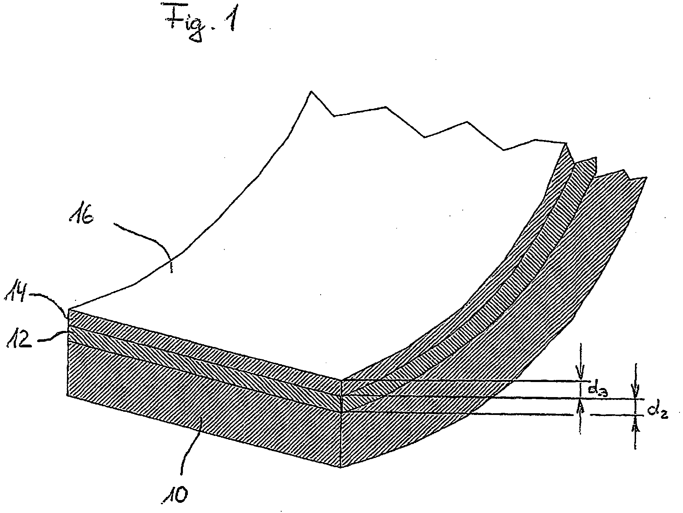

Figur 1 zeigt den prinzipiellen Aufbau einer erfindungsgemäßen Lagerschale mit einer Stützschicht 10, die vorzugsweise aus Stahl besteht. Auf der Stützschicht 10 ist eine Zwischenschicht 12 und eine Lagermetallschicht 14 in dieser Reihenfolge aufplattiert. Auf der Innenseite der Lagermetallschicht 14 ist die Gleitfläche 16 ausgebildet, welche in unmittelbarem Kontakt mit einem Gegenläufer, beispielsweise einer Welle (nicht gezeigt), in gleitendem Kontakt steht. Die Welle liegt (mittelbar) an der Gleitfläche 16 an und übt einen radialen Druck auf das Gleitlagerelement aus. Das Gleitlagerelement ist typischerweise ölgeschmiert, so dass sich bedingt durch die Drehung der Welle ein Ölfilm zwischen dieser und der Gleitfläche unter hydrodynamischem Druck aufbaut, der einen direkten Kontakt zwischen der Welle und der Gleitschicht verhindert.

Aus produktionstechnischen Gründen können die Zwischenschicht 12 und die Lagermetallschicht 14 zu einem zweischichtigen Verbund vorplattiert werden, bevor sie auf die Stahlstützschicht 10 aufplattiert werden. Nach dem Aufplattieren auf die Stahlstützschicht 10 weist die Zwischenschicht des erfindungsgemäßen Gleitlagerelementes eine Dicke d₂ von 50 µm bis 250 µm, vorzugsweise 150 µm bis 175 µm auf. Die Lagermetallschicht weist eine Dicke d₃ von 200 µm bis 400 µm, vorzugsweise 250 µm bis 350 µm auf.

In Figur 3 ist ausschnittsweise ein Schnitt in axialer Richtung im umfänglichen Bereich der größten Belastung eines erfindungsgemäßen Gleitlagerelementes nach einer typischen Beanspruchung gezeigt. Im Vergleich mit Figur 2 ist zu erkennen, dass sowohl die auf die Stahlstützschicht 30 unmittelbar aufplattierte Zwischenschicht 32 als auch die auf die Zwischenschicht 32 aufplattierte Lagermetallschicht 34 nur geringförmig in axialer Richtung aus den Gleitlagerelement heraus gequetscht wurden. Dabei bleibt in idealer Weise sowohl die Walzplattierverbindung 36 zwischen der Stahlstützschicht 30 und der Zwischenschicht 32 als auch die Walzplattierverbindung 38 zwischen der Zwischenschicht 32 und der Lagermetallschicht 34 in Takt, so dass gegenüber dem bekannten Lager gemäß Figur 2 eine wesentlich reduziertes Risiko einer Ablösung der Schichten und damit eines Totalausfalls des Lagers bei gleicher Belastung erwartet wird.

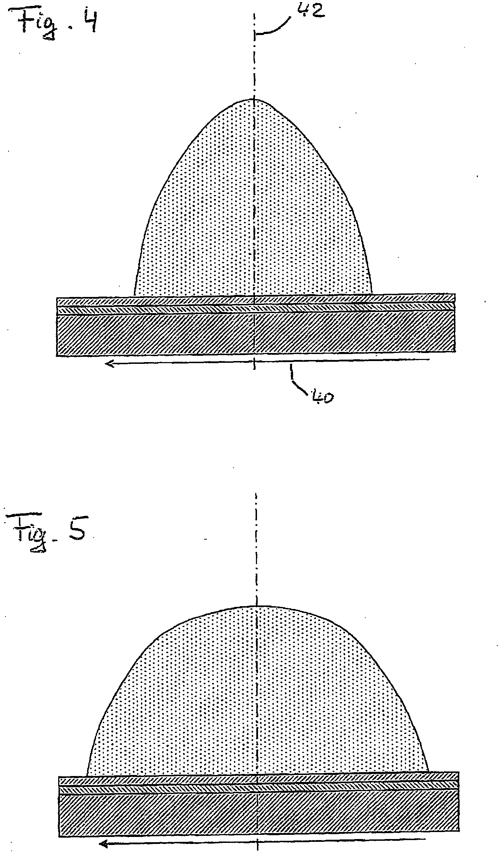

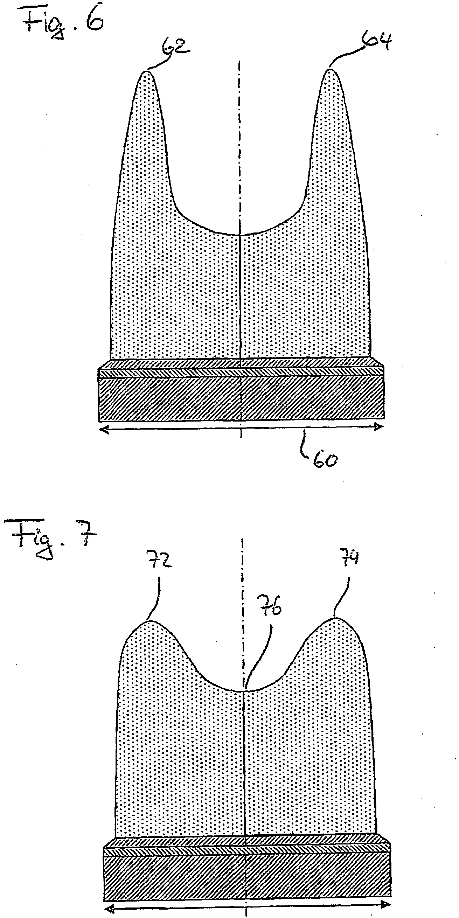

In Figur 4 ist das Druckprofil in einer erstmaligen typischen Belastungssituation eines neuen, d.h. nicht plastisch verformten, Radiallagerelementes in Umfangsrichtung, angedeutet durch den Pfeil 40, gezeigt. Dasselbe Lager in derselben Situation ist in Figur 6 im axialen Schnitt, d.h. über die Lagerbreite, Pfeil 60, im umfänglichen Bereich der größten Belastung dargestellt. In Figur 4 ist ein signifikantes Druckmaximum im Bereich des Scheitelpunktes, gekennzeichnet durch die strichpunktierte Linie 42, zu erkennen. Der Druck wird über einen vergleichsweise schmalen Winkelbereich in Umfangsrichtung verteilt. In Richtung der Lagerbreite 60 verteilt sich der Druck dergestalt ungleich, dass in den axialen Endebereichen zwei signifikante Druckmaxima 62, 64 hervortreten, vgl. Figur 6. Diese spiegeln sogenannte "Kantenträger" wieder, welche durch eine belastungsbedingte Durchbiegung des Gegenläufers (der Welle oder des Wellenzapfens) und/oder durch eine belastungsbedingte Verformung des Lagergehäuses verursacht werden. Die durch die Druckspitzen repräsentierten hohen spezifischen Lasten bewirken eine vorzeitige Materialermüdung und letztendlich einen frühzeitigen Totalausfall des Gleitlagers.

Um die Standfestigkeit des Gleitlagers zu verbessern ist erfindungsgemäß insbesondere die Zwischenschicht so ausgestaltet, dass sie eine hinreichende plastische Verformbarkeit aufweist, die die Druckspitzen nach einer gewissen Einlaufphase reduziert. Dieser Zustand ist in den Figuren 5 und 7 dargestellt. In Figur 5 ist im direkten Vergleich mit Figur 4 zu erkennen, dass nach der Einlaufphase sich der Druck über einen längeren Umfangsabschnitt verteilt und dabei das Maximum des größten Drucks im Scheitelpunkt 42 geringer wird. Es findet bedingt durch die Verformungsfähigkeit der Zwischenschicht unter Betriebslast gewissermaßen eine Umverteilung der Ölfilmdrücke in dem Spalt zwischen Welle und Gleitlagerelement statt. Noch signifikanter ist dieser Effekt in Breitenrichtung des Lagers gemäß Figur 7 zu erkennen. Das Lager wird in den axialen Endbereichen dergestalt plastisch verformt, dass ein Teil des Druckes auf den axialen Mittelbereich umverteilt wird. Die Druckmaxima 72 und 74 werden zu Gunsten eines Druckanstiegs im Bereich des Minimums 76 abgeflacht. Insgesamt gesehen ist die spezifische Lagerbelastung zwar gleich, es gibt jedoch keinen Bereich mehr mit einer gefährlich überhöhten spezifisch Last, so dass eine Ermüdung des Lagermaterials erst nach sehr viel längerer Beanspruchung erwartet wird.

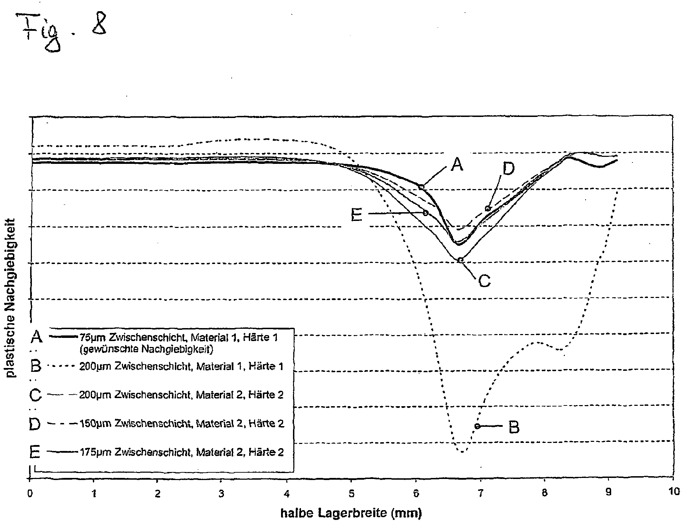

In Figur 8 ist die plastische Nachgiebigkeit, d.h. das Verformungsvermögen erfindungsgemäßer Gleitlagerelemente im Vergleich mit bekannten Gleitlagerelementen in Richtung der (halben) Lagerbreite gezeigt. Die Kurve ist beginnend von der Gleitlagermitte bei 0 in axialer Richtung bis hin zum axialen Ende des Gleitlagers bei 9 dargestellt. Die fette durchgezogene Linie "A" gibt die plastische Nachgiebigkeit eines Werkstoffverbundes gemäß Stand der Technik basierend auf einer 75 µm dicken Zwischenschicht aus einer AlMn1Cu-Legierung (EN AW-3003) mit einer Härte von 60 HV 0,01 wieder. Eine solche Schicht hat wie eingangs bereits erwähnt zwar die für die Verbesserung der Langzeitbelastung notwendige Nachgiebigkeit. Jedoch wird bei Verwendung dieses Zwischenschichtmaterials das in Verbindung mit Figur 2 erläuterte Herausquetschen beobachtet. Allein eine Anhebung der Zwischenschichtdicke unter Verwendung desselben Materials führt zu einer wesentlich zu hohen plastischen Nachgiebigkeit, wie die fette punktierte Linie "B" mit dem signifikanten Minimum bei etwa 6,7 zeigt. Auch kann durch Erhöhung der Dicke der Zwischenschicht allein das Herausquetschen des Zwischenschichtmaterials aus dem Verbundwerkstoff nicht verhindert werden.

Letzteres gelingt erst durch Verwendung einer Aluminiumlegierung für die Zwischenschicht, welche zwischen 3,5 Gew.-% und 4,5 Gew.-% Kupfer aufweist und nach dem Walzplattieren und gegebenenfalls Wärmebehandeln auf eine Mikrohärte zwischen 70 und 110 HV 0,01, vorzugsweise 85 und 100 HV 0,01 eingestellt ist. Gleitlagerelemente mit diesem Zwischenschichtmaterial und unterschiedlichen Zwischenschichtdicken wurden untersucht, wobei sich eine Zwischenschichtdicke zwischen 50 µm und 250 µm als grundsätzlich geeignet erweist, um die gewünschte plastische Nachgiebigkeit zu erzielen. Besonders bevorzugt sind Zwischenschichtdicken zwischen 150 µm, vergleiche Linie "D", und 200 µm, vergleiche Linie"C", und ganz besonders bevorzugt zwischen 150 µm und 175 µm, vergleiche Linie "E".

### Bezugszeichenliste

- 10: Stützschicht
- 12: Zwischenschicht
- 14: Lagermetallschicht
- 16: Gleitfläche
- 20: Stützschicht
- 22: Zwischenschicht
- 24: Lagermetallschicht
- 26: Stirnseite
- 28: Riss
- 30: Stützschicht
- 32: Zwischenschicht
- 34: Lagermetallschicht
- 36: Verbundfläche
- 38: Verbundfläche
- 40: Umfangsrichtung
- 42: Scheitelpunkt
- 60: Breitenrichtung
- 62: Druckmaximum
- 64: Druckmaximum
- 72: Druckmaximum
- 74: Druckmaximum
- 76: Druckminimum

## Patentansprüche

1. Gleitlagerelement mit einer Stützschicht (10, 20, 30), einer Zwischenschicht (12, 22, 32) auf Basis einer Aluminiumlegierung und einer Lagermetallschicht (14, 24, 34) auf Basis einer Aluminiumlegierung, **dadurch gekennzeichnet,**
**dass** die Aluminiumlegierung der Zwischenschicht (12, 22, 32) eine Zusammensetzung mit den folgenden Bestandteilen in Gewichtsprozent und Rest Aluminium aufweist:
| | |
|---|---|
| Kupfer | 3,5 % bis 4,5 %, |
| Mangan | 0,1 % bis 1,5 %, |
| Magnesium | 0,1 % bis 1,5 %, |
wahlweise zusätzlich:
| | |
|---|---|
| Silizium | 0,1 % bis 1,0 %, |
wahlweise zusätzlich:
| | |
|---|---|
| Eisen | 0,05 % bis 1,0 %, |
| Chrom | 0,05 % bis 0,5 %, |
| Zink | 0,05 % bis 0,5 %, |
wahlweise zusätzlich:
Zirkonium und Titan in der Summe 0,05 % bis 0,25 %
wahlweise zusätzlich:
andere Legierungsbestandteile mit nicht mehr als 0,1 % im Einzelnen und 0,25 % in der Summe,
wobei die Zwischenschicht (12, 22, 32) eine Mikrohärte von 70 HV 0,01 bis 110 HV 0,01 aufweist.

2. Gleitlagerelement nach Anspruch 1, **dadurch gekennzeichnet, dass** die Zwischenschicht (12, 22, 32) eine Dicke d₂ von 50 µm bis 250 µm aufweist.

3. Gleitlagerelement nach Anspruch 1, **dadurch gekennzeichnet, dass** die Zwischenschicht (12, 22, 32) eine Dicke d₂ von 150 µm bis 175 µm aufweist.

4. Gleitlagerelement nach einem der vorstehenden Ansprüche, **dadurch gekennzeichnet,**
**dass** die Aluminiumlegierung der Zwischenschicht (12, 22, 32) in Gewichtsprozent aufweist:
| | |
|---|---|
| Mangan | 0,4 % bis 1,0 %, |
| Magnesium | 0,4 % bis 1,0 %, |
| Silizium | 0,2 % bis 0,8 %. |

5. Gleitlagerelement nach einem der vorstehenden Ansprüche, **dadurch gekennzeichnet,**
**dass** die Lagermetallschicht (14, 24, 34) eine Dicke d₃ von 200 µm bis 400 µm aufweist.

6. Gleitlagerelement nach einem der vorstehenden Ansprüche, **dadurch gekennzeichnet,**
**dass** die Lagermetallschicht (14, 24, 34) eine Aluminiumlegierungen mit 1,0 - 3 Gew.-% Nickel, 0,5 - 2,5 Gew.-% Mangan, 0,02 - 1,5 Gew.-% Kupfer, einem Weichphasenanteil von 5 - 20 Gew.-%, den üblichen zulässigen Verunreinigungen und Rest Aluminium aufweist.

7. Gleitlagerelement nach Anspruch 10, **dadurch gekennzeichnet,**
**dass** der Weichphasenanteil der Lagermetallschicht (14, 24, 34) Zinn und/oder Wismut umfasst.

8. Gleitlagerelement nach Anspruch 10 oder 11, **dadurch gekennzeichnet, dass** der Weichphasenanteil in der Lagermetallschicht (14, 24, 34) 8 - 12 Gew.-% beträgt.

9. Gleitlagerelement nach einem der vorstehenden Ansprüche, **dadurch gekennzeichnet,**
**dass** die Lagermetallschicht (14, 24, 34) eine Brinellhärte von 50-60 HBW 1/5/30 aufweist.

10. Gleitlagerelement nach einem der vorstehenden Ansprüche, **dadurch gekennzeichnet,**
**dass** zwischen der Zwischenschicht (12, 22, 32) und der Lagermetallschicht (14, 24, 34) eine Walzplattierverbindung besteht.

11. Gleitlagerelement nach einem der vorstehenden Ansprüche, **dadurch gekennzeichnet,**
**dass** zwischen der Zwischenschicht (12, 22, 32) und der Stützschicht (10, 20, 30) eine Walzplattierverbindung besteht.

12. Gleitlagerelement nach einem der vorstehenden Ansprüche, **dadurch gekennzeichnet,**
**dass** das Gleitlagerelement eine Lagerschale ist.

## Claims

1. Plain bearing element having a support layer (10, 20, 30), an intermediate layer (12, 22, 32) based on an aluminium alloy and a metal bearing layer (14, 24, 34) based on an aluminium alloy, **characterised in that**
the aluminium alloy of the intermediate layer (12, 22, 32) has a composition with the following constituent components in percent by weight and the balance being aluminium:
| | |
|---|---|
| copper | from 3.5% to 4.5%, |
| manganese | from 0.1% to 1.5%, |
| magnesium | from 0.1% to 1.5%, |
optionally in addition:
| | |
|---|---|
| silicon | from 0.1% to 1.0%, |
optionally in addition:
| | |
|---|---|
| iron | from 0.05% to 1.0%, |
| chromium | from 0.05% to 0.5%, |
| zinc | from 0.05% to 0.5%, |
optionally in addition:
zirconium and titanium at a total of from 0.05% to 0.25%,
optionally in addition:
other alloy components at no more than 0.1% individually and 0.25% in total, the intermediate layer (12, 22, 32) having a microhardness of from 70 HV 0.01 to 110 HV 0.01.

2. Plain bearing element according to claim 1, **characterised in that** the intermediate layer (12, 22, 32) has a thickness d2 of from 50 µm to 250 µm.

3. Plain bearing element according to claim 1, **characterised in that** the intermediate layer (12, 22, 32) has a thickness d2 of from 150 µm to 175 µm.

4. Plain bearing element according to any one of the preceding claims, **characterised in that**
the aluminium alloy of the intermediate layer (12, 22, 32) has in percent by weight:
| | |
|---|---|
| manganese | from 0.4% to 1.0%, |
| magnesium | from 0.4% to 1.0%, |
| silicon | from 0.2% to 0.8%. |

5. Plain bearing element according to any one of the preceding claims, **characterised in that**
the metal bearing layer (14, 24, 34) has a thickness d3 of from 200 µm to 400 µm.

6. Plain bearing element according to any one of the preceding claims, **characterised in that**
the metal bearing layer (14, 24, 34) has an aluminium alloy having from 1.0 to 3% by weight of nickel, from 0.5 to 2.5% by weight of manganese, from 0.02 to 1.5% by weight of copper, a soft phase proportion of from 5 to 20% by weight, the usual permissible impurities and the balance being aluminium.

7. Plain bearing element according to claim 6, **characterised in that** the soft phase proportion of the metal bearing layer (14, 24, 34) comprises tin and/or bismuth.

8. Plain bearing element according to claim 6 or claim 7, **characterised in that** the soft phase proportion in the metal bearing layer (14, 24, 34) is from 8 to 12% by weight.

9. Plain bearing element according to any one of the preceding claims, **characterised in that**
the metal bearing layer (14, 24, 34) has a Brinell hardness of from 50 to 60 HBW 1/5/30.

10. Plain bearing element according to any one of the preceding claims, **characterised in that**,
between the intermediate layer (12, 22, 32) and the metal bearing layer (14, 24, 34), there is a roll cladding connection.

11. Plain bearing element according to any one of the preceding claims, **characterised in that**,
between the intermediate layer (12, 22, 32) and the support layer (10, 20, 30), there is a roll cladding connection.

12. Plain bearing element according to any one of the preceding claims, **characterised in that**
the plain bearing element is a bearing shell.

## Revendications

1. Elément de palier lisse pourvu d'une couche de support (10, 20, 30), d'une couche intermédiaire (12, 22, 32) à base d'un alliage d'aluminium et d'une couche de métal antifriction (14, 24, 34) à base d'un alliage d'aluminium, **caractérisé en ce que** l'alliage d'aluminium de la couche intermédiaire (12, 22, 32) présente une composition comprenant les constituants suivants en pour cent en poids, le reste étant constitué d'aluminium :
| | |
|---|---|
| cuivre | 3,5 % à 4,5 %, |
| manganèse | 0,1 % à 1,5 % |
| magnésium | 0,1 % à 1,5 %, |
en option en plus :
| | |
|---|---|
| silicium | 0,1 % à 1,0 %, |
en option en plus :
| | |
|---|---|
| fer | 0,05 % à 1,0 %, |
| chrome | 0,05 % à 0,5 %, |
| zinc | 0,05 % à 0,5 %, |
en option en plus :
zirconium et titane au total 0,05 % à 0,25 %,
en option en plus :
autres constituants d'alliage représentant au plus 0,1 % individuellement et 0,25 % au total,
la couche intermédiaire (12, 22, 32) présentant une microdureté de 70 HV 0,01 à 110 HV 0,01.

2. Elément de palier lisse selon la revendication 1, **caractérisé en ce que** la couche intermédiaire (12, 22, 32) présente une épaisseur d₂ de 50 µm à 250 µm.

3. Elément de palier lisse selon la revendication 1, **caractérisé en ce que** la couche intermédiaire (12, 22, 32) présente une épaisseur d₂ de 150 µm à 175 µm.

4. Elément de palier lisse selon l'une des revendications précédentes, **caractérisé en ce**
**que** l'alliage d'aluminium de la couche intermédiaire (12, 22, 32) présente en pour cent en poids :
| | |
|---|---|
| manganèse | 0,4 % à 1,0 % |
| magnésium | 0,4 % à 1,0 %, |
| silicium | 0,2 % à 0,8 %. |

5. Elément de palier lisse selon l'une des revendications précédentes, **caractérisé en ce**
**que** la couche de métal antifriction (14, 24, 34) présente une épaisseur d₃ de 200 µm à 400 µm.

6. Elément de palier lisse selon l'une des revendications précédentes, **caractérisé en ce**
**que** la couche de métal antifriction (14, 24, 34) présente un alliage d'aluminium avec 1,0 à 3 % en poids de nickel, 0,5 à 2,5 % en poids de manganèse, 0,02 à 1,5 % en poids de cuivre, une fraction de phase souple de 5 à 20 % en poids, les impuretés admissibles habituelles, le reste étant de l'aluminium.

7. Elément de palier lisse selon la revendication 10, **caractérisé en ce que** la fraction de phase molle de la couche de métal antifriction (14, 24, 34) comprend de l'étain et/ou du bismuth.

8. Elément de palier lisse selon la revendication 10 ou 11, **caractérisé en ce que** la fraction de phase molle de la couche de métal antifriction (14, 24, 34) représente 8 à 12 % en poids.

9. Elément de palier lisse selon l'une des revendications précédentes, **caractérisé en ce**
**que** la couche de métal antifriction (14, 24, 34) présente une dureté Brinell de 50-60 HBW 1/5/30.

10. Elément de palier lisse selon l'une des revendications précédentes, **caractérisé en ce**
**qu'**il existe une liaison par placage par laminage entre la couche intermédiaire (12, 22, 32) et la couche de métal antifriction (14, 24, 34).

11. Elément de palier lisse selon l'une des revendications précédentes, **caractérisé en ce**
**qu'**il existe une liaison par placage par laminage entre la couche intermédiaire (12, 22, 32) et la couche de support (10, 20, 30).

12. Elément de palier lisse selon l'une des revendications précédentes, **caractérisé en ce**
**que** l'élément de palier lisse est un coussinet de palier.
